# EUROPÄISCHE PATENTSCHRIFT

(11) **EP 2 476 260 B1**
(45) Veröffentlichungstag und Bekanntmachung des Hinweises auf die Patenterteilung: **14.02.2018**
(21) Anmeldenummer: 10772954.3
(22) Anmeldetag: 06.09.2010
(51) Int. Cl.: G02B 27/10, H04N 13/02

(54) **VORRICHTUNG ZUR POSITIONIERUNG UND KALIBRIERUNG VON MINDESTENS ZWEI KAMERAS MIT EINEM HALBDURCHLÄSSIGEN SPIEGEL ZUR PLASTISCHEN BILDAUFNAHME**
APPARATURS FOR POSITIONING AND CALIBRATION OF AT LEAST TWO CAMERAS WITH A SEMI TRANSPARENT MIRROR FOR STEREOSCOPIC IMAGE PICKUP
APPAREIL POUR POSITIONER ET CALIBRER AU MOINS DEUX CAMERAS AVEC UN MIRROIR SEMI TRANSPARENT POUR LA PRISE D'IMAGES STEREOSCOPIQUES

(30) Priorität: 08.09.2009 DE 102009040530
(43) Veröffentlichungstag der Anmeldung: 18.07.2012
(73) Patentinhaber: Maier, Florian, 82205 Gilching (DE)
(72) Erfinder: Maier, Florian, 82205 Gilching (DE)
(86) Internationale Anmeldenummer: PCT/DE2010/001052
(87) Internationale Veröffentlichungsnummer: WO 2011/029426

(56) Entgegenhaltungen:
- WO-A2-2009/012761
- DE-C- 958 902
- JP-A- 2003 315 902
- JP-A- 2004 312 545
- US-A- 2 630 737
- US-A- 2 838 975
- US-A- 2 929 305
- US-A- 5 140 415
- US-A- 5 461 515
- US-A- 5 659 825
- US-A1- 2005 053 274
- US-A1- 2006 104 595
- US-B1- 6 338 711
- Anonymous: "3D CineCast: Stereoscopic 3-D Tools at NAB", , 29 April 2009 (2009-04-29), XP055151303, Retrieved from the Internet: URL:http://3dcinecast.blogspot.nl/2009/04/ stereoscopic-3-d-tools-at-nab.html [retrieved on 2014-11-06]

## Beschreibung

Die Erfindung betrifft eine Vorrichtung zur Positionierung und Kalibrierung von mindestens zwei Kameras mit einem halbdurchlässigen Spiegel zur plastischen Bildaufnahme.

### Stand der Technik und Problem:

Zur Aufnahme von plastisch wirkenden Bildern sind mindestens zwei Ansichten von einem aufzunehmenden Objekt notwendig. Diese Ansichten unterscheiden sich meist nur in einer kleinen Blickwinkeländerung. Um diese kleine Blickwinkeländerung zu erhalten, ist es meist nicht ausreichend, die Kameras nur nebeneinander zu stellen, da die Kameragehäuse und/oder die Objektive zu groß sind, um die Kameras nahe genug aneinander zu positionieren. Hier müssten sich die Kameragehäuse förmlich überlappen können, was physikalisch nicht möglich ist. Insbesondere im Filmbereich wird daher eine spezielle Vorrichtung genutzt, die die Strahlengänge von mindestens zwei Kameras über einen halbdurchlässigen Spiegel so zusammenführt, dass sich die Strahlengänge beider Kameras überlappen können, ohne dass sich die Gehäuse und/oder Objektive gegenseitig stören (siehe Literatur: Lipton, Lenny: Foundations of the Stereoscopie Cinema; A Study in Depth, Van Nostrand Reinhold Company, 1982). Diese Vorrichtungen werden in der Regel nicht immer mit dem gleichen Kameratyp sondern mit verschiedenen Kameratypen und/oder Objektiven je nach Aufgabenstellung und Präferenz des Nutzers versehen. Da die in einer solchen Apparatur gleichzeitig zur plastischen Aufnahme genutzten Kameras und Objektive nie die exakt gleichen geometrischen Eigenschaften (z.B. aufgrund von Fertigungstoleranzen) zueinander aufweisen (insbesondere trifft dies bei Zoomoptiken zu) und damit eine von vornherein kalibrierte Aufnahmevorrichtung (z.B. durch parallele optische Achsen in einer horizontalen Ebene) nie gegeben ist, müssen die Positionen der Strahlengänge aufeinander abgeglichen werden, um Fehler, wie z.B. eine Höhenparallaxe oder divergierende optische Achsen, zu vermeiden.

Bekannt ist, dass diese Anpassung entweder an der Kamera selbst durch eine Positioniereinrichtung angepasst werden kann oder durch das Drehen eines Spiegels um eine feste Achse, der in einer sogenannten Spiegelbox drehbar gelagert ist, wobei die Spiegelbox fest mit dem Rest der Aufnahmevorrichtung verbunden ist. Aus DE 958 902 A ist beispielsweise eine Einrichtung bekannt, bei der der Spiegel um die vertikale Achse gedreht werden kann; die Kameras können dort in einem gemeinsamen Gehäuse, in welchem auch der Spiegel gelagert werden kann, angeordnet sein. Auch aus der Druckschrift US 2 630 737 ist eine Aufnahmevorrichtung für dreidimensionale Bewegtbildaufnahmen bekannt, bei der der Spiegel wie bei DE 958 902 A um eine horizontale Achse gedreht werden kann; alternativ dazu kann die Drehung dort auch an der Kamera bei statischem Spiegel erfolgen.
Aus der US 2 838 975 ist eine Vorrichtung zur Aufnahme von dreidimensionalen Bildern bekannt, bei der ein totalreflektierender Spiegel zum Einsatz kommt.
In einem Internet-blogspot "3D Cine Cast:Stereoscopic 3-D Tools at NAB" werden unterschidliche 3D-Camera-Rigs gezeigt, bei denen u.a. eine Strahlenteilung vorgenommen wird.
In der US 2006/0104595 A1 wird eine Halterung eines optischen Elements beschrieben.
Nachteilig bei der Anpassung an der Kamera selbst durch eine Positioniereinrichtung ist, dass insbesondere bei schwereren Kameras eine sehr teure, robuste, genaue und aufwändige Positioniermechanik notwendig ist, die sich auch negativ auf das Gesamtgewicht der Apparatur auswirkt. Nachteilig beim Drehen des Spiegels um eine feste Achse ist, dass ebenfalls eine sehr robuste, genaue, schwere und teilweise komplizierte Mechanik notwendig ist, um den Spiegel wirklich schwingungsfrei zu installieren, was bislang noch nicht gelungen ist. Insbesondere die Schwingungsfreiheit ist ein sehr wichtiger Punkt, da es insbesondere bei tieffrequenten Schallwellen (z.B. bei einem Live-Konzert) oder Erschütterungen (bei einer Bewegung der gesamten Vorrichtung) zu Erschütterungen und damit zum Wackeln nur eines Bildes (nämlich des gespiegelten) kommen kann. Dies stört den plastischen Eindruck massiv. Ein weiterer Nachteil ist, dass durch diese Methode sehr viel wertvoller Platz an den Seiten der Spiegelbox verloren geht, der die Weitwinklichkeit des Objektivs stark einschränkt. Ebenso ist das genaue Kippen nicht sehr einfach zu bewerkstelligen.

### Problemlösung:

Als Lösung zur qualitativen Verbesserung und Vereinfachung des Stands der Technik schlägt die Erfindung zwei Möglichleiten entsprechend den unabhängigen Ansprüchen 1 und 2 vor. Vorteilhafte Ausgestaltungen sind in den Ansprüchen 3 bis 16 erläutert.

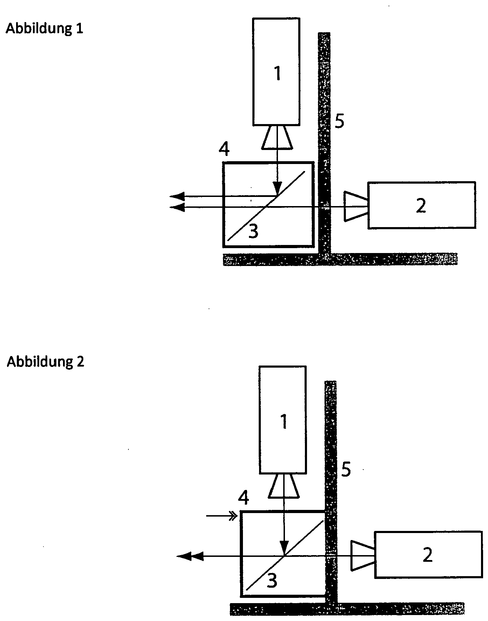

Eine mögliche Lösung sieht vor (siehe Abbildung 1 und 2), dass der halbdurchlässige Spiegel (3) fest und erschütterungsfrei in der Spiegelbox (4) eingebaut ist, die selbst translatorisch (horizontal oder vertikal) beweglich an der Gesamtvorrichtung (5) angebracht ist. Damit nun der Strahlengang der gespiegelten Kamera(s) (1) in der Höhe zum Strahlengang der Kameras, die durch den Spiegel hindurch sehen (2), verstellt werden kann, kann die Box (4) auf Führungen verstellt werden. Diese Verstellung kann auch durch eine spindelgestützte oder ähnlich gestützte Vorrichtung motorisiert erfolgen.

Eine alternative Lösung sieht eine Lagerung an mindestens drei Ecken des Spiegels vor. Zu einer Höhenverstellung können alle Ecken gleichzeitig in eine Richtung verstellt werden. Durch gezieltes Bewegen von mindestens einer der Ecken kann ein feines Kippen des Spiegels entweder um die horizontale Achse, die vertikale Achse oder die diagonale Achse erfolgen. Alternativ können auch gegenüberliegende Ecken in die jeweils entgegengesetzte Richtung bewegt werden. Dies kann z.B. durch eine Kugelgelenklagerung jeder Ecke mit beispielsweise angesetztem genauen Motorengetriebe oder durch einen Piezoantrieb erfolgen, ebenso eine auf Magnetismus basierende Verstellung ist denkbar.

Eine vorteilhafte Ausgestaltung sieht eine horizontale und/oder vertikale Verschiebung bzw. Drehung (auch exzentrisch möglich) des Aufnahmesensors in einer oder mehreren Kameras anstelle oder zusätzlich zu einer Spiegel- oder anderweitigen Verstellung vor. Stattdessen oder zusätzlich kann ein einstellbares und ggf. elektronisch steuerbares optisches Element den Ausgleich zur Kalibrierung schaffen. Hierbei wird der Sensor bzw. das optische Element entweder durch Bedienelemente an der Kamera oder Kabel oder funkgesteuert manuell oder automatisch von einer Rechnereinheit sehr präzise angesteuert und ersetzt damit z.B. ein Kippen des Spiegels oder einer Kamera bzw. ein Drehen eines Spiegels bzw. Drehen einer Kamera. Der Vorteil liegt darin, dass insbesondere die horizontale Korrektur ein Ausgleichsvorgang ist, der keine geometrischen Verzerrungen (Keystone-Distortion - siehe Literatur: Lipton, Lenny: Foundations of the Stereoscopic Cinema; A Study in Depth, Van Nostrand Reinhold Company, 1982) erzeugt, so wie es beim Eindrehen einer Kamera (Konvergenz-Stellung) der Fall sein würde. Ebenfalls würde bei einem Verschieben des Sensors bzw. einem Anpassen des optischen Elements gegenüber einem Verschieben der Einzelbilder zueinander bei der Nachbearbeitung später kein Verschnitt am Rande der Bilder entstehen (Einstellen des sog. Scheinfensters in der Nachbearbeitung - siehe Literatur: Kuhn, Gerhard: Stereofotografie und Raumbildprojektion, vfv Verlag für Foto, Film und Video, Gilching 1999). Dieses Verschieben des Sensors oder des optischen Elements kann durch Piezo-Elemente oder feine Schrittmotoren oder magnetische Linearmotoren erfolgen.

Eine weitere vorteilhafte Ausgestaltung sieht vor, dass ein großer Bildwandler (z.B. CMOS) auch nur in Bildteilen oder einem zusammenhängenden, rechteckigen Bildbereich ausgelesen werden kann, wobei der ausgelesene Bereich je nach Kalibrierung horizontal und/oder vertikal und/oder diagonal und/oder in Rotation versetzt ausgelesen wird, wodurch nicht zwingend der gesamte Bereich aufgezeichnet werden muss und damit Bandbreite und Datenmengen eingespart werden können. Somit kann beispielsweise ein 2k-Sensor (2048 Pixel horizontale Auflösung) nur mit Full-HD (1920 Pixel horizontale Auflösung) ausgelesen werden, wobei bei einer horizontalen Verschiebung 128 Pixel für Korrektur- bzw. Scheinfensteranpassungs-Zwecke zur Verfügung stehen würde. Deutlicher sind die Möglichkeiten natürlich bei höheren Auflösungen (5k-Sensor, aber nur 4k-Aufzeichnung).

Sämtliche notwendige Verstellungen, die nicht durch eine der obigen Alternativen abgedeckt wurden, können durch eine Neigevorrichtung der Kamera um die horizontale und/oder vertikale und/oder diagonale und/oder optische Achse und/oder eine Höhenverstellung erfolgen. Sämtliche Verstellungen an der Vorrichtung können motorisiert oder durch einen Piezoantrieb oder durch ein magnetisches Element oder durch einen magnetischen Antrieb oder ähnliches Bauelement erfolgen.
Um die Aufnahmevorrichtung mit mindestens zwei Kameras. immer in der Balance zu halten, sieht die Erfindung einen Gewichtsausgleich in der Art vor, dass die Kameras jeweils auf zwei eigenen Führungen in die jeweils entgegengesetzte Richtung aus dem Schwerpunkt der Apparatur heraus verschoben werden können.
Die synchrone Bewegung zu beiden Seiten kann durch eine mechanische Kopplung (z.B. einen Riementrieb mit oder ohne Motorantrieb) erfolgen oder durch mindestens zwei synchronisierte Motoren, die die Schlitten beispielsweise über Spindeln gleichzeitig zur jeweils entgegengesetzten Seite bewegen. Um den Schwerpunkt je nach Anbauten erneut austarieren zu können, ist bei mechanischer Kopplung eine Art Kupplung vorhanden, mit denen nur mind. eine Kamera verschoben werden kann, wobei mind. eine andere Kamera unbewegt bleibt, bis das System ausbalanciert ist. Danach wird die Kopplung wieder hergestellt. Dies kann auch elektronisch in Falle einer Kopplung mit Riementrieb und ebenso im Falle einer Zweimotoransteuerung durch eine intelligente Ansteuerung der Motoren erfolgen.
Die Vorrichtung kann auch eine Verstellmöglichkeit zum Einstellen der Kameraentfemung von der Spiegelbox (Bezugszeichen 4 in Abb. 1) vorsehen. Dabei ist die Kamera inklusive eventueller Verstellvorrichtungen zur Kalibrierung auf einem Schlitten montiert (entweder mit Hilfe einer Führung, z.B. kugelgelagert, oder als verschiebbare formschlüssige Verbindung, z.B. Schwalbenschwanz), die in Richtung der Spiegelbox in der Entfernung eingestellt und ggf. in einer Position geklemmt oder gebremst werden kann. Diese Funktion der variablen Abstandsänderung der Kameraeinheit von der Spiegelbox ist nötig, um Objektive mit unterschiedlicher Baulänge montieren zu können. Die Einstellung der Entfernung kann manuell oder über Motoren angesteuert erfolgen. Die Ansteuerung der Motoren kann über eine Rechnereinheit erfolgen, die den Abstand durch im Vorfeld abgespeicherte Werte oder live zur Laufzeit die Kalibrierung der Objektive durch eine Analyse des bzw. beider Videobildes/-bilder sicherstellt.
Für einen Objektivwechsel oder zum Reinigen der Frontlinse kann der auf der Führung gelagerte Kameraschlitten aus dem mit der Spindel oder Motor verbundenen Einheit ausgeklinkt oder entkoppelt werden und auf der Führung sehr schnell manuell in die Richtung entgegengesetzt zur Spiegelbox verschoben werden und ggf. dort in einer Endposition erneut verkoppelt werden, so dass er arretiert ist. Die Arretierung kann auch, ggf. zusätzlich, durch Bremsen am Kameraschlitten gegenüber der Führung oder Gesamtvorrichtung erfolgen. Diese Vorrichtung erleichtert den Objektivwechsel, da die kalibrierte Endposition nach dem Objektivwechsel wieder exakt angefahren werden kann und meist keine Neukalibrierung in der Entfernung notwendig ist.
Das Finden der richtigen Entfernung von der Spiegelbox kann durch einen Zähler erleichtert werden. Bei einem motorisierten Zurückfahren der Kameraschlitten kann die jeweils kalibrierte Position in einer Rechnereinheit abgespeichert werden, die Schlitten auf Knopfdruck von der Spiegelbox wegbewegt werden und nach erfolgtem Objektivwechsel oder Reinigung der Frontlinse wieder angefahren werden. Insbesondere bei der/den Kamera(s), die entgegen der Schwerkraft verstellt werden müssen, kann eine Gegenfederung, die an das Kameragewicht und die Aufbauten angepasst werden kann, ein Bewegen der Kamera(s) inklusive Schlitten entgegen der Schwerkraft erleichtern.

Bei sämtlichen Motoren kann die Ansteuerung entweder manuell dezentral an der Vorrichtung durch den Nutzer erfolgen, oder dezentral per Kabel oder Funkansteuerung. Dabei kann auch eine kleine mobile Steuereinheit zum Einsatz kommen, wie z.B. ein über W-Lan oder Bluetooth angebundenes Steuergerät (z.B. Iphone, iPad oder Subnotebook), das mit einer angepassten Software und einer Nutzeroberfläche mindestens einen Motor steuern kann. Dort können ebenso Daten zur Ansteuerung mind. eines Motors hinterlegt sein. Ebenso ist eine Steuerung manuell über Kabel, Funk oder andere Übertragungswege von einem zentralen Ort aus möglich (z.B. Kontrollraum mit entsprechenden Bildüberwachungsgeräten, z.B. für die plastische Aufnahme geeigneten Monitoren).

Sind mehrere Aufnahmevorrichtungen im Einsatz (z.B. bei einem Mehrkamerabetrieb), so kann ein Operator entweder jede Aufnahmevorrichtung mit einem jeweils eigenen Steuergerät bzw. eigenen Bedienelementen ansteuern oder zwischen den Aufnahmevorrichtungen bzw. Motoren innerhalb einer Aufnahmevorrichtung umschalten und mit immer nur mind. einem Bedienelement steuern.

Die Steuerung der Motoren kann ebenso automatisch über eine Rechnereinheit bzw. Steuereinheit (dezentral an der Aufnahmevorrichtung oder zentral, ggf. auch für mehrere Aufnahmevorrichtungen gleichzeitig) erfolgen. Dabei kann die Steuereinheit die Motoren auf einem berechnenden Algorithmus aufbauend steuern (z.B. die Stereobasis oder die Konvergenzstellung der Kamera). Die dazu notwendigen Werte sind entweder in der Steuereinheit hinterlegt (z.B. durch einen vorausgegangenen Kalibrierungs- oder Einstellungsvorgang), werden durch den Nutzer eingegeben oder zur Laufzeit aus dem verwendeten Equipment (z.B. Auslesen der Objektive - z.B. Fokus und Brennweite) oder durch zusätzliches Equipment (Abstandsmessung durch Laser, Ultraschall, durch Triangulation, Hilfskameras oder aufgrund einer Analyse eines oder mehrerer live aufgenommener Bildinhalte) gewonnen.

Alternativ dazu können Kalibrierungswerte für die Kalibrierungsmotoren oder Einstellungswerte für die Motoren, die die plastische Wirkung des Bildes verändern, auch durch bildanalysierende Algorithmen und ggf. zuvor durch den Nutzer eingestellte Grenzen gewonnen und sogleich für die Steuerung der Motoren genutzt werden. Hierzu können Bildkorrespondenzen zur Feststellung von Kalibrierungsfehlern (Höhenfehler, Drehfehler, Neigefehler, usw.) oder anderen Einstellparametern (Stereobasis) herangezogen werden. Alternativ kann der Nutzer auch selbst Bildteile oder Korrespondenzpunkte (z.B. die Fern-, Scheinfenster- oder Nahpunkte) in mindestens einem der von den Kameras erzeugten Bilder manuell über eine Nutzerschnittstelle markieren, die dann zur Kalibrierung oder für die Einstellung der plastischen Parameter genutzt werden können. Zur erleichterten Feststellung von Bildkorrespondenzen können auch Hilfsvorrichtungen, z.B. mit gut im Bildsignal erkennbaren Mustern oder Markem, eingebracht werden, die dem korrespondenzsuchenden Algorithmus die Suche erleichtern oder von Entfernungsmessvorrichtungen leichter erkannt werden.
Dabei kann der Nutzer über eine Nutzerschnittstelle jederzeit Eingriff in die Steuerung der Motoren haben, und ggf. nutzerspezfische Grenzen oder eine ganze oder teilweise manuelle Steuerung vornehmen. Die Parameter, Hinweise zur Güte der Kalibrierung, die spätere Wirkung auf den Betrachter des plastischen Filmes oder auch die Grenzen der plastischen Betrachtung oder sonstige nützliche Informationen oder Vorschläge können dem Nutzer auf einem Display oder einer anderweitigen Nutzerschnittstelle mitgeteilt werden. In allen Fällen können auch sämtliche Parameter als Metadaten für eine spätere Kontrolle oder eine spätere Kombination des realen Bildinhaltes mit z.B. computergenerierten Elementen (sogen. CGI-Compositing) z.B. mit dem aktuellen Timecode, einer anderen von einem Gerät zur Verfügung gestellten Information oder Bildinhaltes oder einer anderen durch den Nutzer eingegebenen Information separat abgespeichert oder mit dem Videobild zusammen hinterlegt werden. Für die Kombination von Realaufnahmen mit Miniaturaufnahmen (z.B. 1:5) können automatisch Umrechnungen der aufgezeichneten Metadaten in den Miniatur-Maßstab erfolgen und entsprechend auf die Einstellung der Aufnahmevorrichtung nun für den Miniatur-Maßstab angewendet werden.

Ebenfalls können sämtliche Grenzen oder Einstellungen (z.B. das Scheinfenster, der Nah- oder Fernpunkt, der vom Objektiv sichtbare Aufnahmekegel) an einer Nutzerschnittstelle oder im Set angezeigt werden. Dies bietet eine Möglichkeit der Visualisierung der Einstellparameter und Grenzen für Operator und/oder für die an der Aufnahme beteiligten Personen/Darsteller im Objektraum (Aufnahmeset). Dies kann beispielsweise eine Projektion der darstellbaren Grenzen bzw. des Scheinfensters in den Objektraum oder eine Visualisierung an einem Monitor/Head-Mounted-Display (HMD) sein. Dies kann z.B. durch eine Projektion in das Set geschehen (z.B. Laser, der am Stativ angebracht ist, automatisch seine Höhe berechnet und aufgrund geometrischer Berechnungen den Winkel eines breitgefächerten Laserpointers je nach Entfernung ändert. Dies kann auch so geschehen, dass es von der Aufnahmekamera nicht sichtbar ist Ein Ausführungsbeispiel wäre eine Projektion in das Aufnahmeset, bei dem "verbotene" Bildbereiche gekennzeichnet (z.B. farbig markiert) werden - diese Kennzeichnung lässt sich für die echte Aufnahme ausblenden bzw. in für den Menschen sichtbaren aber für die Kamera durch Sperrfilter unsichtbaren Wellenlängenbereichen darstellen. Eine Alternative dazu wäre ein mit den Kameras über beispielsweise Genlock synchronisiertes Projektionssystem, das die Aufnahmepausen (z.B. Austastlücke zwischen zwei Bildern) nutzt, um in genau diesem Moment bestimmte Bereiche in den Aufnahmeraum zu projizieren und rechtzeitig zur erneuten Bildaufnahme der Kameras wieder auszuschalten. Damit würden die markierten und projizierten Bereiche bei der integrale Wahrnehmung des Menschen eingeblendet erscheinen, wohingegen diese bei der plastischen Bildaufnahme für die Kameras nicht sichtbar sind. Alternativ können diese Bereiche auf einer Monitor- oder einer HMD-Visualisierung dargestellt werden.

## Patentansprüche

1. Vorrichtung, bei der die Strahlengänge von mindestens zwei auf einem Grundgestell (5) befestigten Kameras (1, 2) durch einen halbdurchlässigen Spiegel (3) zur plastischen Bildaufnahme zusammengeführt werden,
wobei der halbdurchlässige Spiegel (3) in einer Spiegelbox (4) fest angeordnet ist, **dadurch gekennzeichnet, dass**
die gesamte Spiegelbox (4) zur Adaption der Höhe der optischen Achse der Kamera(s) (1), deren Strahlengänge im Spiegel (3) reflektiert werden, an die optische Achse der Kamera(s) (2), deren Strahlengänge durch den Spiegel (3) transmittiert werden, am Grundgestell (5) auf Führungen in Richtung der entweder horizontalen oder vertikalen Kamerablickrichtung verstellt werden kann.

2. Vorrichtung, bei der die Strahlengänge von mindestens zwei senkrecht zueinander ausgerichteten und auf einem Grundgestell (5) befestigten Kameras (1, 2) durch einen halbdurchlässigen Spiegel (3) zur plastischen Bildaufnahme zusammengeführt werden,
**dadurch gekennzeichnet, dass**
zur Adaption der Höhe der optischen Achse der Kamera(s) (1), deren Strahlengänge im Spiegel (3) reflektiert werden, an die optische Achse der Kamera(s) (2), deren Strahlenlänge durch den Spiegel (3) transmittiert werden, der Spiegel in einer Spiegelhalterung an mindestens drei Ecken so verstellbar befestigt ist, dass er bei gleichzeitiger Verstellung aller Ecken in eine Richtung in der Höhe verstellt werden kann.

3. Vorrichtung nach Anspruch 2, **dadurch gekennzeichnet, dass** der Spiegel in einer Spiegelhalterung an mindestens drei Ecken so verstellbar befestigt ist, dass er zusätzlich durch gezieltes Bewegen von mindestens einer der Ecken um eine horizontale, vertikale und diagonale Achse verstellt werden kann.

4. Vorrichtung nach Anspruch 1 bis 3,
**dadurch gekennzeichnet, dass**
- ein Aufnahmesensor in der Kamera und/oder
- ein optisches Ausgleichselement, das zwischen dem Objektiv und dem Aufnahmesensor oder im Objektiv angeordnet ist,
vertikal und/oder horizontal translatorisch verstellbar ist und/oder um einen Drehpunkt in der Sensorfläche bzw. im oder am Ausgleichselement verstellbar ist.

5. Vorrichtung nach einem der Ansprüche 1 bis 4,
**dadurch gekennzeichnet, dass**
die Vorrichtung so ausgelegt ist, dass aus einem Bildwandler nur Bildteile auslesbar sind, wobei der ausgelesene Bereich je nach Kalibrierung horizontal oder vertikal oder diagonal verschoben ausgelesen wird und ggf. auch nur dieser Bereich aufgezeichnet wird.

6. Vorrichtung nach einem der Ansprüche 1 bis 5, **dadurch gekennzeichnet, dass** die Kamera(s) auf einem am Grundgestell befestigten Schlitten montiert ist (sind), der sich zur Entfernungsanpassung des Objektivs bzw. der Kamera von der Spiegelbox in Aufnahmerichtung auf einer Führung verstellen lässt.

7. Vorrichtung nach einem der Ansprüche 1 bis 6, **dadurch gekennzeichnet, dass** die Kamera(s) mit Ihrem Führungsschlitten zum schnellen Objektivwechsel oder zur Reinigung des Objektivs aus einer eingestellten Position von einem in dieser Position verbleibenden Element ausgekoppelt werden kann (können), von der Spiegelbox wegbewegt werden und nach erfolgtem Objektivwechsel oder Reinigung des Objektivs wieder in die zuvor eingestellte Position bewegt werden kann (können), ohne diese Einstellung zu verlieren.

8. Vorrichtung nach einem der Ansprüche 1 bis 7, **dadurch gekennzeichnet, dass** die Verstellung eines, mehrerer oder sämtlicher Freiheitsgrade durch Motoren oder anderweitige elektrische oder elektromagnetische Antriebe erfolgt.

9. Vorrichtung nach einem der Ansprüche 5 bis 8, **dadurch gekennzeichnet, dass** die Ansteuerung zumindest eines Motors bzw. des Auslesebereiches über eine mobile Rechnereinheit erfolgt.

10. Vorrichtung nach einem der Ansprüche 5 bis 9, **dadurch gekennzeichnet, dass** in einer Rechnereinheit die Werte für die Ansteuerung des Auslesebereiches bzw. zumindest eines Motors nach einem berechnenden Algorithmus erzeugt werden, und dass die Parameter, aus denen der berechnende Algorithmus einen Wert zur Ansteuerung zumindest eines Motors bzw. des Auslesebereiches berechnet, von der Kamera oder dem Objektiv oder durch ein Entfernungsmessgerät oder von Hilfskameras ausgelesen werden.

11. Vorrichtung nach einem der Ansprüche 5 bis 10, **dadurch gekennzeichnet, dass** sie so ausgelegt ist, dass die Korrekturparameter zur Ansteuerung des Auslesebereiches bzw. zumindest eines Motors vorab ausgemessen oder berechnet, dann abgespeichert und schließlich mit Hilfe von Parametern, die zu Laufzeit aus Kamera oder Objektiv ausgelesen werden, sogleich wieder abgerufen werden können.

12. Vorrichtung nach einem der Ansprüche 5 bis 11, **dadurch gekennzeichnet, dass** sie so ausgelegt ist, dass die Werte für die Ansteuerung des Auslesebereiches bzw. zumindest eines Motors nach einem bildanalysierenden Algorithmus aus dem aktuellen Videobild der Hauptkameras oder dem Videobild von Hilfskameras erzeugt werden können.

13. Vorrichtung nach Anspruch 12, **dadurch gekennzeichnet, dass** der bildanalysierende Algorithmus Bildkorrespondenzen zur Feststellung von Kalibrierungsfehlern oder anderen Einstellparametern verwendet.

14. Vorrichtung nach einem der Ansprüche 1 bis 13, **dadurch gekennzeichnet, dass** die Grenzen der stereoskopischen Betrachtung im Aufnahmeset angezeigt werden ggf. auch für die Nutzer sichtbar sind.

15. Vorrichtung nach Anspruch 14, **dadurch gekennzeichnet, dass** die Grenzen für die Kamera(s) unsichtbar angezeigt werden, z.B. durch eine Projektionsvorrichtung, die Informationen in ausgewählten Wellenlängenbereichen oder in mit den Kameras synchronisierten Zeitbereichen so projiziert, dass diese die plastische Bildaufnahme nicht stören, wohl aber für den menschlichen Betrachter sichtbar sind.

16. Vorrichtung nach einem der Ansprüche 1 bis 15, **dadurch gekennzeichnet, dass** sie so ausgelegt ist, dass sämtliche Parameter als Metadaten, z.B. mit dem aktuellen Timecode, einer anderen von einem Gerät zur Verfügung gestellten Information oder Bildinhalt oder mit dem Videobild, für eine spätere Kontrolle oder Kombination des Bildinhaltes mit ggf. computergenerierten Elementen zusammen hinterlegt werden können.

## Claims

1. Device with which the beam paths of at least two cameras (1, 2) mounted on a supporting frame (5) are merged through a partial mirror (3) to take three-dimensional pictures whereby the partial mirror (3) is firmly fixed to a mirror box (4) **that is characterised by** the whole mirror box (4) being able to be moved on guides on the supporting frame (5) towards the either horizontal or vertical direction of the camera axis to adapt the height of the optical axis of the camera(s) (2) whose beam paths are being reflected in the mirror (3) to the optical axis of the camera(s) whose beam paths are being transmitted through the mirror.

2. Device with which the beam paths of at least two cameras (1, 2) vertically aligned to each other and mounted on a supporting frame (5) are merged through a partial mirror (3) to take three-dimensional pictures **that is characterised by** a mirror box with a mirror bracket being attached to the supporting frame and the mirror being fastened onto the mirror bracket at least on three corners so that it can be adjusted for height when adjusted on all three corners at the same time in one direction, in order to adapt the height of the optical axes of the camera(s) (1), whose beam paths are being reflected in the mirror (3) to the optical axis of the camera(s) (2) whose beam paths are being transmitted through the mirror (3).

3. Device according to Claim 2 **that is characterised by** a mirror box with a mirror bracket being attached at the supporting frame and the mirror being fastened onto the mirror bracket at least on three corners so that it can additionally be moved around a horizontale axis and/or a vertical axis and/or a diagonal axis by selective moving of at least one corner.

4. Device according one of the Claims 1 to 3 **that is characterised by**
- a photo sensor in the camera and/or an
- optical compensation element arranged between or in the lens and the photo sensor,
that can be adjusted vertically and/or horizontally translational and/or around a pivot point in the sensor area or in or at the compensation element.

5. Device according one of the Claims 1 to 4 **that is characterised by** the device being designed so that only partial image areas can be read out from an image sensor, whereby the area that has been read out is read out according to the calibrated values by being moved either horizontally, vertically or diagonally and, as the circumstances require, with only this area being recorded.

6. Device according to one of the Claims 1 to 5 **that is characterised by** the camera(s) being mounted onto a carrier attached to the supporting frame that can be moved on a guide to adapt the distance setting of the lens or the camera respectively, from the mirror box to the bearing of the plate perpendicular.

7. Device according to one of the Claims 1 to 6 **that is characterised by** the camera(s) with their guide carriers being able to be disconnected in a set position from an element that is remaining in the position to allow the lens to be quickly changed or to clean the lens, to be moved away from the mirror box and, after the lens has been changed or the lens has been cleaned, to be moved back to the previously adjusted position without losing this adjustment.

8. Device according to one of the Claims 1 to 7 **that is characterised by** the movement or adjustment in one or several or all degrees of freedom being done by motors or alternative electrical or electromagnetic drives.

9. Device according to one of the Claims 5 to 8 **that is characterised by** at least one motor or the read out area respectively being controlled by a mobile computer unit.

10. Device according to one of the Claims 5 to **9 that is characterised by** the values used to control the read-out area or to trigger at least one motor, being generated in a computer unit according to a calculating algorithm and the parameters from which the calculating algorithm calculates a value to trigger at least one motor or to control the read-out area, being able to be read out of the camera or the lens or of a distance metre or of auxiliary cameras.

11. Device according to one of the Claims 5 to 10 **that is characterised by** the device being designed so that the correcting parameters used to trigger at least one of the motors can be measured or calculated in advance, then stored and finally recalled again immediately with the help of parameters that are read out from the camera or the lens during the operating time.

12. Device according to one of the Claims 5 to 11 **that is characterised by** the device being designed so that the values for controlling the read-out area or triggering at least one motor can be generated from the current video visual/signal of the main cameras or the video visual/signal of auxiliary cameras according to an algorithm used to analyse images.

13. Device according to Claim 12 **that is characterised by** the algorithm used to analyse images using image correspondences to determine calibration errors or to set other parameters.

14. Device according to one of the Claims 1 to 13 **that is characterised by** the limits of the stereoscopic view being displayed in the film set also being visible to the users if necessary.

15. Device according to Claim 14 **that is characterised by** the limits set for the camera(s) are being displayed blanked, e.g. through a projection device that projects the information in selected wavelength ranges or in time ranges that are synchronised with the cameras so that these do not disturb the taking of the three-dimensional pictures although they can be seen by the human eye.

16. Device according to one of the Claims 1 to **15 that is characterised by** the device being designed so that all parameters can be stored together with e.g. the current time code, information provided by another piece of equipment or image content or in combination with the video material as metadata for subsequent controls or in order to combine the image content later with, for example, computer generated elements

## Revendications

1. Dispositif, dans lequel les faisceaux de rayons d'au moins deux caméras (1, 2) fixées sur un châssis de base (5) sont réunis pour la prise de vue en trois dimensions au moyen d'un miroir semi-transparent (3),
le miroir semi-transparent (3) étant disposé de façon fixe,
**caractérisé en ce que**
la boîte à miroir complète (4) pour l'adaptation de la hauteur de l'axe optique de la (des) caméra(s) (1) dont les faisceaux de rayons sont réfléchis dans le miroir (3) à l'axe optique de la (des) caméra(s) dont les faisceaux de rayons sont transmis par le miroir (3) sur le châssis de base (5) sur les guides peut être réglée vers la direction de la caméra soit horizontale, soit verticale.

2. Dispositif, dans lequel les faisceaux de rayons d'au moins deux caméras (1, 2) orientées perpendiculairement l'une par rapport à autre et fixées sur un châssis de base (5) sont réunis pour la prise de vue en trois dimensions au moyen d'un miroir semi-transparent (3),
**caractérisé en ce que**
pour l'adaptation de la hauteur de l'axe optique de la (des) caméra(s) (1) dont les faisceaux de rayons sont réfléchis dans le miroir (3) à l'axe optique de la (des) caméra(s) (2) dont les faisceaux de rayons sont transmis par le miroir (3), le miroir dans une monture de miroir est fixé sur au moins trois arrêtes de manière à pouvoir être réglé en hauteur pendant le réglage simultané de toutes les arrêtes dans une direction.

3. Dispositif selon la revendication 2, **caractérisé en ce que** le miroir dans une monture de miroir est fixé sur au moins trois arrêtes de manière à pouvoir être réglé en outre grâce un mouvement ciblé d'au moins une arrête d'un axe horizontal, vertical et diagonal.

4. Dispositif selon les revendications 1 à 3,
**caractérisé en ce que**
- un capteur de prise dans la caméra et / ou
- un élément de compensation optique est disposé entre l'objectif et le détecteur de prise de vues ou dans l'objectif,
est réglable en translation verticalement et / ou horizontalement et / ou est réglable d'un point de rotation dans la surface de détection et dans ou sur l'élément de compensation.

5. Dispositif selon l'une des revendications 1 à 4,
**caractérisé en ce que**
le dispositif est conçu de telle sorte que seulement des parties d'image peuvent être lues dans le convertisseur d'images, la zone lue étant lue en décalage horizontal, vertical ou diagonal en fonction du calibrage, et le cas échéant seule cette zone est enregistrée.

6. Dispositif selon l'une des revendications 1 à 5, **caractérisé en ce que** la (les) caméra(s) est (sont) montée(s) sur un coulisseau fixé sur le châssis de base et pouvant être réglé sur un guidage pour l'ajustement de l'éloignement de l'objectif ou de la caméra de la boîte à miroir en direction de la prise de vues.

7. Dispositif selon l'une des revendications 1 à 6, **caractérisé en ce que** la (les) caméra(s) avec leur chariot de guidage peut (peuvent) être dissociée(s) d'un élément restant dans une position réglée à partir de cette position pour un changement d'objectif rapide ou pour le nettoyage de l'objectif, peut (peuvent) être éloignée(s) de la boîte à miroir et peut (peuvent) revenir dans la position préalablement réglée après le changement d'objectif effectué ou le nettoyage de l'objectif sans perdre ce réglage.

8. Dispositif selon l'une des revendications 1 à 7, **caractérisé en ce que** le réglage d'un, de plusieurs ou de tous les degrés de liberté est effectué par des moteurs ou par d'autres entraînements électriques ou électromagnétiques.

9. Dispositif selon l'une des revendications 5 à 8, **caractérisé en ce que** la commande au moins d'un moteur ou d'un champ de lecture est effectuée au moyen d'une unité de traitement.

10. Dispositif selon l'une des revendications 5 à 9, **caractérisé en ce que** dans une unité de traitement, les valeurs pour la commande du champ de lecture ou au moins d'un moteur sont créées selon un algorithme calculateur, et que les paramètres, à partir desquels l'algorithme calculateur calcule une valeur pour la commande au moins d'un moteur ou du champ de lecture, sont lus par la caméra ou l'objectif ou au moyen d'un télémètre ou par des caméras auxiliaires.

11. Dispositif selon l'une des revendications 5 à 10, **caractérisé en ce qu'**il est conçu de telle sorte que les paramètres de correction de la commande de la zone de lecture ou au moins d'un moteur sont mesurés et calculés par avance, puis mémorisés et finalement peuvent être aussitôt récupérés à l'aide des paramètres lus de la caméra ou de l'objectif pendant ce temps.

12. Dispositif selon l'une des revendications 5 à 11, **caractérisé en ce qu'**il est conçu de telle sorte que les valeurs pour la commande de la zone de lecture ou au moins d'un moteur peuvent être créées selon un algorithme d'analyse d'image à partir de l'image vidéo actuelle de la caméra principale ou de l'image vidéo des caméras auxiliaires.

13. Dispositif selon la revendication 12, **caractérisé en ce que** l'algorithme d'analyse d'image utilise des correspondances d'images pour déterminer des erreurs de calibrage ou autres paramètres de réglage.

14. Dispositif selon l'une des revendications 1 à 13, **caractérisé en ce que** les limites de la vision stéréoscopique sont affichées dans l'ensemble de prise de vues et, le cas échéant, sont également visibles pour les utilisateurs.

15. Dispositif selon la revendication 14, **caractérisé en ce que** les limites de la (des) caméra(s) sont affichées de façon invisible, p. ex. par un dispositif de projection qui projette les informations dans les bandes de longueur d'onde sélectionnées ou dans des périodes synchronisées avec les caméras, qu'elles ne perturbent pas la prise de vues tridimensionnelle mais sont bien visibles aux observateurs humains.

16. Dispositif selon l'une des revendications 1 à 15, **caractérisé en ce qu'**il est conçu de telle sorte que tous les paramètres peuvent être déposés ensemble en tant que métadonnées, p. ex. avec le timecode actuel, d'une autre information mise à la disposition par un autre appareil ou d'un contenu visuel ou avec l'image vidéo pour un contrôle ultérieur ou une combinaison du contenu visuel avec des éléments éventuellement générés par l'ordinateur.
